(19) Europäisches Patentamt
European Patent Office
Office européen des brevets

(11) **EP 3 553 806 B1**

(12) **EUROPÄISCHE PATENTSCHRIFT**

(45) Veröffentlichungstag und Bekanntmachung des Hinweises auf die Patenterteilung:
**09.03.2022 Patentblatt 2022/10**

(21) Anmeldenummer: **19168581.7**

(22) Anmeldetag: **11.04.2019**

(51) Internationale Patentklassifikation (IPC):
**H01H 39/00** *(2006.01)* **B60R 21/017** *(2006.01)*

(52) Gemeinsame Patentklassifikation (CPC):
**B60R 21/017; H01H 39/006;** H01H 2039/008

(54) **VORRICHTUNG ZUR ERZEUGUNG EINES SPANNUNGSIMPULSES**

DEVICE FOR GENERATING A VOLTAGE IMPULSE

DISPOSITIF DE GÉNÉRATION D'UNE IMPULSION DE TENSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2018 AT 503102018**

(43) Veröffentlichungstag der Anmeldung:
**16.10.2019 Patentblatt 2019/42**

(73) Patentinhaber: **Astotec Automotive GmbH
2552 Hirtenberg (AT)**

(72) Erfinder: **Munoz, Leyton
2345 Brunn am Gebirge (AT)**

(74) Vertreter: **Müllner, Martin et al
Patentanwälte Dr. Erwin Müllner
Dipl.-Ing. Werner Katschinka
Dr. Martin Müllner
Postfach 169
1010 Wien (AT)**

(56) Entgegenhaltungen:
WO-A1-2017/066816  DE-B3-102016 107 707
US-A- 5 701 038  US-A- 5 898 122

EP 3 553 806 B1

## Beschreibung

### Technisches Gebiet

Die vorliegende Erfindung betrifft eine Vorrichtung zur Erzeugung eines Spannungsimpulses aus einer niederohmigen Spannungsquelle zur Zündung eines pyrotechnischen Zünders, wobei die Spannung der niederohmigen Spannungsquelle geringer ist als die notwendige Zündspannung des pyrotechnischen Zünders, sowie eine Schutzvorrichtung für eine Leitung einer Spannungsversorgung eines Kraftfahrzeuges, die solch eine Vorrichtung enthält.

### Stand der Technik

Die Bedeutung der Elektromobilität erlebt aus ökologischen Gründen einen starken Aufschwung, und damit einhergehend steigt die Zahl der Elektrofahrzeuge massiv an. Durch den elektrischen Antrieb ergeben sich durch die verwendeten Spannungen jedoch auch neue Gefahren im Fall eines Unfalls, deren Auswirkungen vom Brand des Fahrzeugs bis zur Gefährdung von Rettungskräften und Umwelt reichen können. Deshalb ist es erforderlich, die Batterieversorgung bei Überschreiten eines maximalen Stromwerts, also insbesondere im Falle eines Kurzschlusses, zuverlässig abzuschalten. Für den Bereich kleiner Ströme (0-2 kA) wird die allpolige Abschaltung durch zwei Schütze realisiert. Für den Bereich höherer Ströme werden entweder Sicherungen oder pyrotechnische Schalter sowie teilweise auch Kombinationen daraus verbaut. Nachteilig ist einerseits, dass die Auslösung der Systeme eine Spannungsversorgung erfordert, die auch im Falle eines Crashs sichergestellt werden muss, und andererseits die vorhandenen Informationen über den Stromfluss verwendet werden, also keine Redundanz vorliegt. Der zweite Punkt ist wichtig, weil alle Schaltungen eine Fehlerrate besitzen und somit immer ein kleines Risiko der Nichtfunktion bleibt.

In DE 102016107707 B ist daher vorgeschlagen worden, den Strom zu bestimmen, indem der Spannungsabfall zwischen zwei Punkten einer Stromschiene gemessen wird. Da der Widerstand der Stromschiene bekannt ist, kann aus dem Spannungsabfall der Strom errechnet werden. Weiters wird der Spannungsabfall dazu verwendet, die Versorgungsspannung für die Schutzvorrichtung zu erzeugen, sei es mit einem Spannungswandler, sei es mit einem Spannungsteiler. Damit ist ein autarkes System gegeben, das keine eigene Spannungsversorgung benötigt und den Strom selbständig bestimmt, also nicht auf die Daten des Bordnetzes angewiesen ist.

Gemäß dieser Schrift ist zwischen den beiden Punkten des Leiters in der Stromschiene eine Aussparung vorgesehen, um den Widerstand zu erhöhen. Dadurch bekommt man natürlich eine ausreichend hohe Spannung, um die Schutzvorrichtung zu versorgen, aber man bekommt auch entsprechend hohe Verluste im Normalbetrieb. Will man bei einem Strom von einigen Hundert Ampere eine Spannung von z.B. 5 V generieren, so bedeutet dies eine Verlustleistung in der Größenordnung von Kilowatt.

Man kann Stromschienen aber mit wesentlich geringeren Widerständen herstellen, was für eine geringe Verlustleistung normalerweise auch angestrebt wird. Für eine Stromschiene mit einem Widerstand von 100 $\mu\Omega$ ergibt sich aber auch bei einem typischen Überstrom von 1500 A erst ein Spannungsabfall von 0,15 V.

Nun ist es möglich, mittels eines DC-DC-Konverters auch aus solch geringen Spannungen eine akzeptable Versorgungsspannung für die Schutzvorrichtung, z.B. 5 V, zu erzeugen, jedenfalls dann, wenn der Strom im Grenzbereich ist.

Wenn nur ein geringer Spannungsabfall an der Stromschiene zur Verfügung steht, gibt es allerdings das Problem, dass nicht genügend Energie für die Zündung des pyrotechnischen Schalters zur Verfügung steht. Übliche pyrotechnische Schalter haben einen Widerstand von rund 2 Ohm und sollten einen Energieeintrag von zumindest 3 mJ während höchstens 0,5 ms erhalten, um eine zuverlässige Zündung zu gewährleisten. So viel Leistung kann der DC-DC-Konverter eventuell nicht zur Verfügung stellen.

Es ist zwar möglich, dass man - wenn der DC-DC-Konverter einen weiteren Ausgang für einen Kondensator aufweist - an diesen Ausgang einen Kondensator, vorzugsweise einen Superkondensator (Supercap), zur Speicherung der Energie für den pyrotechnischen Schalter anschließt. Damit bleibt nicht nur die Schutzvorrichtung bei kurzfristigen Unterbrechungen des Antriebs des Fahrzeugs betriebsbereit, sondern es kann auf einfache Weise die im Kondensator gespeicherte Energie auch zum Zünden des pyrotechnischen Schalters verwendet werden. Die Verwendung der im Kondensator gespeicherten Energie hat jedoch den Nachteil, dass die Schutzvorrichtung erst dann aktiv werden kann, wenn der Kondensator ausreichend geladen ist, was - wenn der Kurzschluss außerhalb des Betriebs des Fahrzeugs erfolgt - relativ lang dauern kann, d.h. die Reaktionszeit der Schutzvorrichtung ist groß.

US5898122 offenbart eine Vorrichtung zur Erzeugung eines Spannungsimpulses aus einer niederohmigen Spannungsquelle zur Zündung eines pyrotechnischen Zünders.

### Kurzbeschreibung der Erfindung

Es ist Aufgabe der vorliegenden Erfindung, die Vorrichtung der eingangs genannten Art so auszubilden, dass der notwendige Stromimpuls nahezu instantan, innerhalb von einigen wenigen Millisekunden, erzeugt werden kann.

Diese Aufgabe wird durch eine Vorrichtung der eingangs genannten Art erfindungsgemäß dadurch gelöst, dass der Zünder parallel zu einer Induktivität geschaltet ist und die Zündspannung durch Unterbrechen des durch die niederohmige Spannungsquelle hervorgerufenen Stromflusses durch die Induktivität generiert wird. Erfindungsgemäß ist die niederohmige Spannungsquelle ein stromdurchflossener Leiter, von dem die Spannung an zwei verschiedenen Punkten abgegriffen wird.

Es wird somit die notwendige Zündenergie in der Induktivität gespeichert und im Bedarfsfall schlagartig freigesetzt. Die Induktivität kann jedoch innerhalb weniger Millisekunden einem entsprechenden Stromfluss ausgesetzt werden, sodass der Stromimpuls auch nach einigen wenigen Millisekunden erzeugt werden kann.

Damit in der Induktivität genügend Energie gespeichert werden kann, ist es wichtig, dass sie einerseits nicht zu klein ist und andererseits von einem hohen Strom durchflossen wird, d.h. der ohmsche Widerstand soll möglichst klein sein. Bevorzugt beträgt daher die Induktivität mindestens 1 $\mu$H, bevorzugt mindestens 2 $\mu$H, besonders bevorzugt mindestens 4 $\mu$H , und sie weist einen Widerstand von maximal 5 m$\Omega$, vorzugsweise maximal 2 m$\Omega$, auf. Entscheidend für die Energie, die die Spule speichern kann, ist der Quotient von Induktivität und Quadrat des Widerstands. Wenn der Gesamtwiderstand nicht hauptsächlich von der Spule bestimmt wird, sondern von anderen Komponenten, dann kann durch Serienschaltung von zwei gleichen Spulen die gespeicherte Energie nahezu verdoppelt werden (doppelte Induktivität, Gesamtwiederstand durch die zweite Spule nur geringfügig erhöht).

Es ist dabei zweckmäßig, wenn der Stromfluss durch die Induktivität von einem Transistor, vorzugsweise FET, stärker bevorzugt MOSFET, insbesondere selbstsperrendem MOSFET, gesteuert ist. MOSFETs können sehr hohe Ströme mit nur äußerst geringem Spannungsabfall schalten.

Dabei ist wichtig, dass der Transistor eine hohe Durchbruchspannung hat, denn mehr als die Durchbruchsspannung kann am Zünddraht nicht anliegen. Der Transistor soll daher eine Durchbruchsspannung von mindestens 40 V, vorzugsweise mindestens 55 V, aufweisen.

Wenn der Transistor von einem Rechteckgenerator angesteuert ist, dann wird mit jedem Rechteck ein Zündimpuls generiert, d.h. auch wenn der pyrotechnische Schalter nicht beim ersten Mal zünden sollte, schadet das nicht, weil ständig weitere Zündimpulse generiert werden.

Weiters ist für den Einsatz bei einer Schutzvorrichtung für eine Leitung einer Spannungsversorgung eines Kraftfahrzeuges zweckmäßig, wenn die niederohmige Spannungsquelle ein stromdurchflossener Leiter ist, von dem die Spannung an zwei verschiedenen Punkten abgegriffen wird.

Wie eingangs erwähnt betrifft die vorliegende Erfindung auch eine Schutzvorrichtung für eine Leitung einer Spannungsversorgung eines Kraftfahrzeuges. Diese Schutzvorrichtung ist an zwei Punkten des Leiters angeschlossen, wobei der durch den Widerstand der Leitung zwischen diesen zwei Punkten hervorgerufene Spannungsabfall von der Schutzvorrichtung zur Detektion eines Überstroms im Leiter an einem Eingang eines ersten Spannungskomparators angeschlossen ist, an dessen zweiten Eingang ein vorgegebener Spannungswert anliegt. Das Signal am Ausgang des ersten Spannungskomparators wird direkt oder indirekt einem pyrotechnischen Schalter zugeführt, sodass bei Überschreiten des vorgegebenen Spannungswerts der pyrotechnische Schalter auslöst. Aus dem Spannungsabfall wird weiters ein DC/DC-Konverter gespeist, an dessen Ausgang die Versorgungsspannung der Schutzvorrichtung zur Verfügung gestellt wird. Dies ist aus der oben erwähnten DE 102016107707 B bekannt. Erfindungsgemäß ist vorgesehen, dass der Zündimpuls für den pyrotechnischen Schalter durch eine Vorrichtung wie oben beschrieben erzeugt wird.

Es ist besonders günstig, wenn die Spannungsversorgung des Rechteckgenerators vom Ausgang des ersten Spannungskomparators stammt. Auf diese Weise ist es unmöglich, dass Rechteckimpulse generiert werden, wenn nicht der erste Spannungskomparator einen Überstrom feststellt.

Im Rahmen der vorliegenden Erfindung wurde weiters festgestellt, dass die Versorgungsspannung im Normalfall (also bei geringer Belastung des Stromnetzes) trotz DC-DC-Konverters oft zu gering ist, um eine zuverlässige Funktion der Schutzvorrichtung zu gewährleisten. Es ist aber natürlich höchst unerwünscht, wenn der pyrotechnische Schalter ausgelöst wird, weil die Schutzvorrichtung wegen einer zu geringen Versorgungsspannung unzuverlässig arbeitet.

Es ist daher nach einer Ausgestaltung der Erfindung vorgesehen, dass bei Erreichen eines Sollwerts für die Betriebsspannung ein Signal "Power good" bereitgestellt wird und die Schutzvorrichtung blockiert ist, solange dieses Signal "Power good" fehlt.

Dieser Ausgestaltung liegt die Erkenntnis zu Grunde, dass - solange die Versorgungsspannung nicht gewährleistet ist - für die Steuerschaltung keine Veranlassung besteht, aktiv zu werden, weil in diesem Fall die Stromstärke ohnehin deutlich unterhalb des Grenzwertes liegt. Sie wird daher während dieser Zeiten deaktiviert und erst aktiviert, wenn die Versorgungsspannung zuverlässig hergestellt ist.

Dies ist auf einfache Weise dadurch realisierbar, dass der erste Spannungskomparator nur dann mit einer Versorgungsspannung versorgt ist, wenn das Signal "Power good" vorhanden ist.

Das Signal "Power good" kann generiert werden, wenn die vom DC-DC-Konverter erzeugte Versorgungsspannung in einem vorgegebenen Wertebereich liegt. Solch ein Signal wird von fertigen Bausteinen oft zur Verfügung gestellt, aber da dieses Signal oft hochohmig ist, kann es nicht direkt als Spannungsversorgung verwendet werden. Es ist daher zusätzlich vorgesehen, dass die Versorgungsspannung des ersten Spannungskomparators vom Ausgang eines zweiten Spannungskomparators stammt, an dessen Eingängen das Signal "Power good" und ein Schwellwert angeschlossen sind. Somit wird das Signal "Power good" mit dem Schwellwert verglichen, und der Ausgang des zweiten Spannungskomparators folgt dem Signal "Power good". Ausgänge von Spannungskomparatoren sind aber niederohmig, sodass sie sich als Versorgungsspannung eignen, jedenfalls bei LowPower-Bausteinen.

Bei dieser Ausführung ist es zweckmäßig, dass der Schwellwert von einer internen Spannungsreferenz des zweiten Spannungskomparators stammt. Es ist dabei natürlich zu überprüfen, dass die Spannungsreferenz eine Spannung liefert, die über dem (maximalen) LOW-Wert und unter dem (minimalen) HIGH-Wert des "Power good"-Signals liegt.

Weiters ist es günstig, wenn der pyrotechnische Schalter als pyrotechnische Trennvorrichtung ausgebildet ist und außerhalb der beiden Punkte am Leiter angebracht ist, im Gegensatz dazu, wie es in der oben genannten DE 102016107707 B beansprucht ist. Wenn eine von vielen Hundert Ampere, ja oft mehr als 1000 Ampere durchflossene Stromschiene schlagartig durchtrennt wird, entstehen extreme Spannungen, die eventuell dazu führen, dass die gesamte Schutzvorrichtung zerstört wird, wenn der pyrotechnische Schalter zwischen den beiden Punkten am Leiter angeordnet ist. Dies kann völlig unvorhersehbare Folgen haben und insbesondere dazu führen, dass die Schutzvorrichtung selbst leitfähig wird und der Strom dann statt über die durchtrennte Stromschiene über die zerstörte Schutzvorrichtung weiter fließt, was klarerweise der Intention, den Stromfluss zu unterbrechen, zuwiderläuft.

## Kurze Beschreibung der Zeichnungsfiguren

An Hand der beiliegenden Zeichnungen wird die vorliegende Erfindung näher erläutert. Die Schaltung besteht aus einem DC-DC-Konverter, einem ersten und zweiten Spannungskomparator, einem Rechteckgenerator und einer Treiberstufe mit pyrotechnischem Schalter. Es zeigt:

    Fig. 1 bis 5 eine Ausführungsform einer erfindungsgemäßen Schaltung, und zwar:
    Fig. 1 die Schaltung des DC-DC-Konverters;
    Fig. 2 die Schaltung des ersten und des zweiten Spannungskomparators;
    Fig. 3 eine alternative Schaltung des ersten und des zweiten Spannungskomparators;
    Fig. 4 die Schaltung des Rechteckgenerators; und
    Fig. 5 die Schaltung der Treiberstufe mit pyrotechnischem Schalter.

## Beschreibung der Ausführungsarten

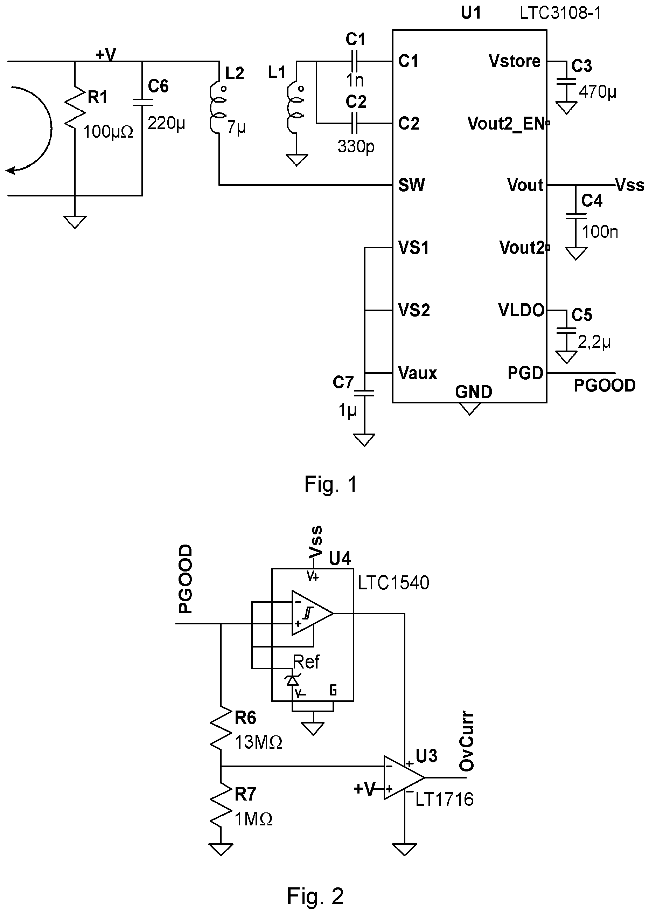

In Fig. 1 ist eine Stromschiene durch den Widerstand R1 angedeutet. R1 ist typisch 100 μΩ. Durch diese Stromschiene fließt der zu überwachende Betriebsstrom (durch einen gebogenen Pfeil angedeutet) eines Elektrofahrzeugs.

Ein (Anschluss-)Punkt der Stromschiene wird als Nullpotential (Masse) der Schaltung definiert; das ist aber nicht zwingend die Fahrzeugmasse. Der andere (Anschluss-)Punkt der Stromschiene hat demgegenüber eine Spannung +V. Bei 1500 A beträgt diese 0,15 V.

Der DC-DC-Konverter U1 ist mit einem Baustein LTC3108-1 realisiert, der die Schaltung des sogenannten Joule Thief realisiert. An dessen Eingang SW ist +V über eine Spule L2 (7 μH) angeschlossen. Der Eingang SW legt die Spule abwechselnd an Masse oder unterbricht die Verbindung zur Masse. Dadurch entsteht in der Spule L2 ein (Rechteck-)Wechselstrom. L2 bildet zusammen mit L1 (70000 μH) einen Transformator 1:100 (die Induktivität steigt mit dem Quadrat der Windungszahl). Die in L1 entstehende Spannung wird über Kondensatoren C1 (1 nF) und C2 (330 pF) an die Eingänge C1 und C2 gelegt. Über C2 wird der (interne) MOSFET angesteuert, der L2 an Masse legt (oder eben nicht). C2 und L1 bestimmen zusammen die Frequenz. Typische Frequenzen dafür sind 10 bis 100 kHz. Über C1 wird die hochtransformierte Wechselspannung in den DC-DC-Konverter U1 eingespeist, dort gleichgerichtet und auf 5,25 V stabilisiert. Diese Spannung wird am Ausgang Vaux zur Verfügung gestellt. Aus dieser Spannung wird weiters eine Hilfsspannung von typisch 2,2 V erzeugt und am Ausgang VLDO zur Verfügung gestellt.

Durch die Beschaltung von VS1 und VS2 wird die Ausgangsspannung Vss, die am Ausgang Vout zur Verfügung gestellt wird, festgelegt. Wenn wie im Ausführungsbeispiel Vaux mit VS1 und VS2 verbunden ist, ist die Ausgangsspannung 5 V. Wenn die Ausgangsspannung um nicht mehr als 7,5% vom Sollwert abweicht, wird das Signal Power good (PGOOD) am Ausgang PGD auf HIGH gesetzt (d.h. PGOOD ist mindestens 2,1 V). Sinkt die Spannung um mehr als 9% vom Sollwert ab, wird das Signal PGOOD wieder auf LOW gesetzt (d.h. PGOOD ist höchstens 0,3 V).

Der Ausgang PGD (Signal Power good, PGOOD) ist im Zustand HIGH über einen Widerstand von 1 MΩ mit VLDO verbunden. Der Ausgang PGD ist also sehr hochohmig und kann keinesfalls als Versorgungsspannung für weitere Bausteine genutzt werden.

Der DC-DC-Konverter U1 hat weiters noch einen Anschluss Vstore, an dem ein Kondensator C3 (im Beispiel 470 μF) angeschlossen ist. Wenn die Ausgangsspannung den Sollwert erreicht hat, wird C3 mit überschüssiger Energie aufgeladen (auf maximal 5,25 V). Wenn über C1 nicht genügend Energie eingespeist wird, kann die in C3 gespeicherte Energie kurzfristig zur Erzeugung von Vss genutzt werden. Der Kondensator kann auch mit besonders hoher Kapazität (=Supercap) ausgeführt sein. Damit können zwar längere Betriebsunterbrechungen überbrückt werden, es dauert allerdings auch länger, bis nach einer erstmaligen Inbetriebnahme der Kondensator aufgeladen ist.

Vss steht typisch nach einer Zeit von 18 ms bei 1600 A Strom durch die Stromschiene zur Verfügung, d. h. nach dieser Zeit geht PGOOD auf HIGH.

Wie man aus Fig. 2 erkennt, dient der Spannungsabfall +V an der Stromschiene auch als Messsignal für die Stromstärke: es wird dem nicht-invertierenden Eingang + des Komparators U3 (LT1716) zugeführt. An den invertierenden Eingang - wird das durch den Spannungsteiler R6 und R7 geteilte Signal PGOOD gelegt. R6 ist z.B. 13 MΩ und R7 1 MΩ. Wie erwähnt ist der Ausgang PGD hochohmig (1 MΩ), was beim Spannungsteiler zu berücksichtigen ist. (R6 ist effektiv 14 MΩ). Bei einem typischen Wert von 2,2 V für PGOOD liegt am invertierenden Eingang somit eine Vergleichsspannung von rund 0,15 V an, sodass der Ausgang von U3 auf HIGH wechselt, wenn durch die Stromschiene ein Strom von mehr als 1500 A fließt. Das Signal am Ausgang von U3 ist mit OvCurr (over current) bezeichnet.

Damit nun U3 bei ungenügender Spannung Vss nicht "unsinnige" Ausgangssignale OvCurr liefert, ist U3 nicht direkt an Vss angeschlossen. Die Spannungsversorgung erfolgt vielmehr über den Ausgang von U4 (einem Komparator vom Typ LTC1540). Am nicht-invertierenden Eingang + von U4 liegt das Signal PGOOD, am invertierenden Eingang - das Signal REF, eine Referenzspannung von typisch 1,182 V (mindestens 1,152 V, maximal 1,212 V), die der LTC1540 selbst erzeugt. Diese Referenzspannung liegt somit zwischen den Werten HIGH und LOW von PGOOD, sodass der Ausgang von U4 immer dann HIGH ist, wenn PGOOD HIGH ist, und immer dann LOW ist, wenn PGOOD LOW ist. Der Ausgang von U4 ist allerdings (im Gegensatz zum Signal PGOOD) niederohmig: selbst bei einer Belastung von 60 mA sinkt die Ausgangsspannung nur von 5 V auf ca. 3,5 V, was einem Innenwiderstand von 25 Ω entspricht. Der Strombedarf von U3 bei offenem Ausgang ist aber maximal 0,085 mA.

U4 wird vom DC-DC-Konverter U1 mit der Versorgungsspannung Vss versorgt.

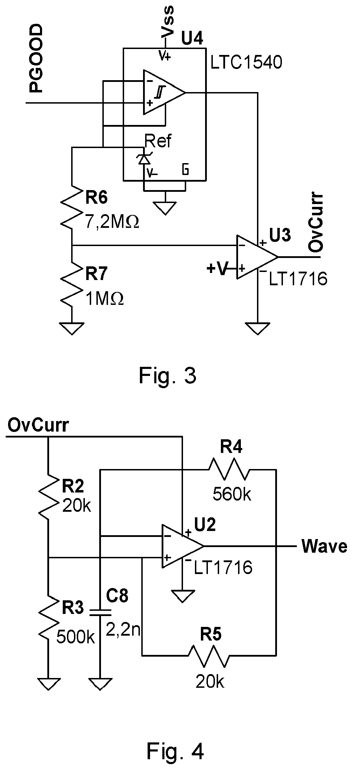

Die Schaltung gemäß Fig. 3 unterscheidet sich von der Schaltung gemäß Fig. 2 nur durch die Vergleichsspannung für U3. Gemäß Fig. 3 wird diese nicht aus dem Signal PGOOD erzeugt, sondern aus der Referenzspannung von U4, die typisch 1,182 V beträgt. Wenn R6 7,2 MΩ beträgt und R7 wiederum 1 MΩ, ergibt sich wiederum eine Vergleichsspannung von rund 0,15 V, sodass die Sicherung bei etwa 1500 A durch die Stromschiene anspricht. Die Vergleichsspannung kann aber auch vom Ausgang VLDO des DC-DC-Konverters U1 abgeleitet werden, die typisch 2,2 V beträgt.

Das Signal OvCurr am Ausgang von U3 ist nicht ausreichend energiereich, um die Zündung des pyrotechnischen Schalters auszulösen. Damit der Zünder zündet, muss bei üblichen Zündern gemäß Spezifikation eine Energie von mindestens 3 mJ während maximal 0,5 ms zugeführt werden, das bedeutet eine Leistung von zumindest 6 W. Bei einem Widerstand von 2,1 W bedeutet dies einen Strom von zumindest 1,7 A. Der DC-DC-Konverter kann jedoch höchstens einige mA liefern.

Es ist daher vorgesehen, dass das Ausgangssignal OvCurr von U3 einen Rechteckgenerator mit Spannung versorgt, wie dies in Fig. 4 dargestellt ist. Der Rechteckgenerator lässt sich günstiger Weise mittels eines rückgekoppelten Komparators U2 (im Beispiel wiederum ein LT1716) realisieren. Am Ausgang von U2 ist ein RC-Glied bestehend aus R4 (560 kΩ) und C8 (2,2 nF) angeschlossen, dessen Mittelpunkt am invertierenden Eingang - angeschlossen ist. Am nicht-invertierenden Eingang + von U2 liegt die über den Spannungsteiler R2 (20 kΩ) und R3 (500 kΩ) geteilte Versorgungsspannung OvCurr an, also abgesehen von R5 rund 96% von OvCurr. Durch R5 (20 kΩ), der den Ausgang von U2 und den Mittelpunkt des Spannungsteilers verbindet, wird diese Spannung aber nach oben und unten gezogen (je nach Zustand des Ausgangs), um die notwendige Hysterese zu erzeugen. Die Spannung wechselt dann zwischen rund 98% von OvCurr und rund 49% von OvCurr. Damit ergibt sich ein asymmetrisches Rechtecksignal, d.h. der Zustand HIGH dauert länger als der Zustand LOW. Dieses Rechtecksignal ist mit "Wave" bezeichnet.

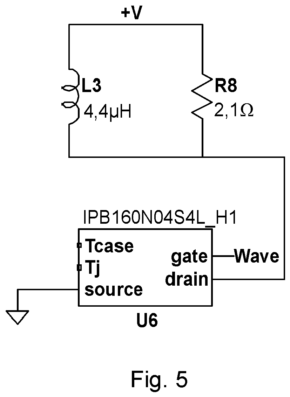

Gemäß Fig. 5 wird dieses Rechtecksignal dem Gate von U6 zugeführt, einem selbstsperrenden MOSFET der Type IPB160N04S4L-H1. Am Drain ist parallelgeschaltet eine Induktivität L3 und der Zünddraht des pyrotechnischen Schalters (R8, 2,1 Ω) angeschlossen, die nicht mit Vss (der vom DC-DC-Konverter U1 gelieferten Versorgungsspannung), sondern mit +V (also der Spannung an der Stromschiene) versorgt werden. Die Induktivität L3 ist mittels zweier in Serie geschalteter Spulen der Type IHXL-2000VZ-5A realisiert. Die Spulen IHXL-2000VZ-5A haben jeweils eine Induktivität von 2,2 μH und einen Widerstand von 0,21 mΩ, die Serienschaltung hat somit 4,4 μH und 0,42 mΩ. Auch wenn +V klein ist (mindestens 0,15 V), so kann dennoch (wenn das Signal Wave HIGH ist, also U6 leitet) ein hoher Strom durch L3 bewirkt werden, weil +V extrem niederohmig zur Verfügung steht (der Innenwiderstand ist jedenfalls kleiner als 100 μΩ). Der Widerstand des IPB160N04S4L-H1 beträgt bei zumindest 4 V am Gate weniger als 2 mΩ (jedenfalls bis 200 A). Insgesamt ergibt sich somit ein ohmscher Widerstand von 2,43 mΩ. Bei 0,15 V ergibt dies einen maximalen Strom von über 60 A. Der Strom steigt wegen der Induktivität nach der Gleichung

$$I = I_{max}\,(1\text{-}e^{t/t})$$

an, wobei t = L/R ist, in diesem Fall also rund 1,8 ms. Nach 4 ms sind rund 89% des Maximalstroms, also rund 55 A, erreicht. Die in der Spule gespeicherte Energie ist $I^2 \cdot L/2$, also über 6 mJ.

Wenn dann anschließend das Signal Wave auf LOW wechselt und der Transistor U6 sperrt, fließt der (hohe) Strom durch L3, mit Anfang bezeichnet, (wegen der Trägheit von Induktivitäten) eine kurze Zeit weiter. Dabei hat er zwei Möglichkeiten: durch den Zünddraht R8 oder durch den gesperrten Transistor U6 und die Stromschiene R1. Am gesperrten Transistor U6 fällt dabei die Durchbruchsspannung $V_{(BR)DSS}$ ab. Der IPB160N04S4L-H1 hat eine Durchbruchsspannung $V_{(BR)DSS}$ von zumindest 40 V. Bei 40 V beträgt der Strom durch den Zünddraht 19 A und somit die Leistung im Zünddraht R8 rund 760 W.

Die Zeit, bis der Strom durch die Spule so gering wird, dass am Zünddraht R8 weniger als die Durchbruchsspannung $V_{(BR)DSS}$ abfällt, berechnet sich zu:

$$t = L \cdot (I_{Anfang}/V_{(BR)DSS} - 1/R8)$$

Das ergibt rund 3,9 $\mu$s und somit eine Energie von 3 mJ. Die verbleibende Energie in der Spule ist rund 0,8 mJ, die nun ausschließlich im Zünddraht R8 umgesetzt wird. Die Zeitkonstante ist L3/R8, d.h. rund 2 $\mu$s; die verbleibende Energie wird also mit Sicherheit innerhalb der geforderten 1 ms umgesetzt. In Summe ergibt dies eine Energie von deutlich mehr als die geforderten 3 mJ.

Sollte die Zündung nicht beim ersten Mal erfolgen, so setzt sich das so lange fort, bis die Zündung eintritt (und der Zünddraht zerstört wird, der Strom durch die Stromschiene unterbrochen wird und somit die gesamte Schaltung stromlos wird).

Aus den obigen Überlegungen ergibt sich, dass das Rechtecksignal etwa 3 bis 5 ms HIGH sein soll. Die Zeit, in der es LOW ist, kann demgegenüber nahezu beliebig kurz sein.

Die Schaltung als solche kann komplett autonom ausgeführt werden und besitzt in dieser Ausbildung nach außen hin nur zwei Anschlüsse, analog zu einer Sicherung.

Der pyrotechnische Schalter muss nicht als Stromtrenner ausgebildet sein. Er kann auch einen Kurzschluss auslösen, der eine vorgeschaltete Sicherung zum Durchbrennen bringt und damit den Stromfluss unterbricht. In diesem Fall ist die Anschluss-Anordnung zumindest dreipolig, mit zwei Sensorleitungen und Verbindung zum zweiten Pol der Stromquelle.

**Patentansprüche**

1. Vorrichtung zur Erzeugung eines Spannungsimpulses aus einer niederohmigen Spannungsquelle zur Zündung eines pyrotechnischen Zünders (R8), wobei die Spannung der niederohmigen Spannungsquelle geringer ist als die notwendige Zündspannung des pyrotechnischen Zünders (R8), und wobei der Zünder (R8) parallel zu einer Induktivität (L3) geschaltet ist und die Zündspannung durch Unterbrechen des durch die niederohmige Spannungsquelle hervorgerufenen Stromflusses durch die Induktivität (L3) generiert wird, **dadurch gekennzeichnet, dass** die niederohmige Spannungsquelle ein stromdurchflossener Leiter ist, von dem die Spannung an zwei verschiedenen Punkten abgegriffen wird.

2. Vorrichtung nach Anspruch 1, **dadurch gekennzeichnet, dass** die Induktivität (L3) mindestens 1 $\mu$H, vorzugsweise mindestens 2 $\mu$H, besonders bevorzugt mindestens 4 $\mu$H beträgt.

3. Vorrichtung nach Anspruch 1 oder 2, **dadurch gekennzeichnet, dass** der Widerstand der Induktivität maximal 5 m$\Omega$, vorzugsweise maximal 2 m$\Omega$, beträgt.

4. Vorrichtung nach einem der Ansprüche 1 bis 3, **dadurch gekennzeichnet, dass** der Stromfluss durch die Induktivität (L3) von einem Transistor (U6), vorzugsweise FET, stärker bevorzugt MOSFET, insbesondere selbstsperrendem MOSFET, gesteuert ist.

5. Vorrichtung nach Anspruch 4, **dadurch gekennzeichnet, dass** der Transistor (U6) eine Durchbruchsspannung von mindestens 40 V, vorzugsweise mindestens 55 V, aufweist.

6. Vorrichtung nach Anspruch 4 oder 5, **dadurch gekennzeichnet, dass** der Transistor (U6) von einem Rechteckgenerator (U2) angesteuert ist.

7. Schutzvorrichtung für eine Leitung einer Spannungsversorgung eines Kraftfahrzeuges,

   wobei diese Schutzvorrichtung an zwei Punkten des Leiters angeschlossen ist, wobei der durch den Widerstand (R1) der Leitung zwischen diesen zwei Punkten hervorgerufene Spannungsabfall von der Schutzvorrichtung zur Detektion eines Überstroms im Leiter an einem Eingang eines ersten Spannungskomparators (U3) angeschlossen ist, an dessen zweiten Eingang ein vorgegebener Spannungswert anliegt, und dass das Signal (OvCurr) am Ausgang des ersten Spannungskomparators (U3) direkt oder indirekt einem Zünder (R8) eines pyrotechnischen Schalters zugeführt wird, sodass bei Überschreiten des vorgegebenen Spannungswerts der pyrotechnische Schalter auslöst,
   wobei weiters aus dem Spannungsabfall ein DC/DC-Konverter (U1) gespeist wird, an dessen Ausgang (Vout) die Versorgungsspannung (Vss) der Schutzvorrichtung zur Verfügung gestellt wird,
   **dadurch gekennzeichnet, dass**
   die Schutzvorrichtung eine Vorrichtung nach einem der Ansprüche 1 bis 6 enthält.

8. Schutzvorrichtung nach Anspruch 6 und 7, **dadurch gekennzeichnet, dass** die Spannungsversorgung des Rechteckgenerators (U2) vom Ausgang des ersten Spannungskomparators (U3) stammt.

9. Schutzvorrichtung nach Anspruch 7 oder 8, **dadurch gekennzeichnet, dass** bei Erreichen eines Sollwerts für die Betriebsspannung ein Signal "Power good" (PGOOD) bereitgestellt wird und die Schutzvorrichtung blockiert ist, solange dieses Signal "Power good" (PGOOD) fehlt.

10. Schutzvorrichtung nach Anspruch 9, **dadurch gekennzeichnet, dass** der erste Spannungskomparator (U3) nur dann mit einer Versorgungsspannung versorgt ist, wenn das Signal "Power good" (PGOOD) vorhanden ist.

11. Schutzvorrichtung nach Anspruch 10, **dadurch gekennzeichnet, dass** das Signal "Power good" (PGOOD) generiert wird, wenn die vom DC-DC-Konverter erzeugte Versorgungsspannung (Vss) in einem vorgegebenen Wertebereich liegt, und dass die Versorgungsspannung des ersten Spannungskomparators (U3) vom Ausgang eines zweiten Spannungskomparators (U4) stammt, an dessen Eingängen das Signal "Power good" (PGOOD) und ein Schwellwert (REF) angeschlossen sind.

12. Schutzvorrichtung nach Anspruch 11, **dadurch gekennzeichnet, dass** der Schwellwert (REF) von einer internen Spannungsreferenz des zweiten Spannungskomparators (U4) stammt.

13. Schutzvorrichtung nach einem der Ansprüche 7 bis 12, **dadurch gekennzeichnet, dass** der pyrotechnische Schalter als pyrotechnische Trennvorrichtung ausgebildet ist und außerhalb der beiden Punkte am Leiter angebracht ist.

**Claims**

1. A device for generating a voltage pulse from a low impedance voltage source for igniting a pyrotechnic igniter (R8), wherein the voltage of the low impedance voltage source is lower than the necessary ignition voltage of the pyrotechnic igniter (R8), and the igniter (R8) is connected in parallel to an inductance (L3), and the ignition voltage is generated by interrupting the current flow through the inductance (L3) caused by the low impedance voltage source, **characterized in that** the low impedance voltage source is a conductor flowed through by a current from which the voltage is tapped at two different points.

2. The device according to claim 1, **characterized in that** the inductance (L3) is at least 1 μH, preferably at least 2 μH, more preferably at least 4 μH.

3. The device according to claim 1 or 2, **characterized in that** the resistance of the inductance is at most 5 mΩ, preferably at most 2 mΩ.

4. The device according to any of claims 1 to 3, **characterized in that** the current flow through the inductance (L3) is controlled by a transistor (U6), preferably a FET, more preferably a MOSFET, in particular an enhancement MOSFET.

5. The device according to claim 4, **characterized in that** the transistor (U6) includes a breakdown voltage of at least 40 V, preferably at least 55 V.

6. The device according to claim 4 or 5, **characterized in that** the transistor (U6) is activated by a square wave generator (U2).

7. A protection device for a conductor of a power supply of a motor vehicle,

wherein said protection device is connected to two points of the conductor, wherein said voltage drop caused by the resistance (R1) of the conductor between said two points is connected to an input of a first voltage comparator (U3) for detecting an over current in the conductor by the protection device, at the second input of the voltage comparator (U3) a predetermined voltage value is applied, and in that the signal (OvCurr) at the output of the first voltage comparator (U3) is fed directly or indirectly to an igniter (R8) of a pyrotechnic switch, so that, when exceeding the predetermined voltage value, the pyrotechnic switch is triggered,
wherein further from the voltage drop a DC/DC converter (U1) is fed, at the output (Vout) of which the supply voltage (Vss) of the protection device is provided,
**characterized in that**
the protection device contains a device according to any one of claims 1 to 6.

8. The protection device according to claims 6 and 7, **characterized in that** the output of the first voltage comparator (U3) is the voltage supply of the square wave generator (U2).

9. The protection device according to claim 7 or 8, **characterized in that** when reaching a target value for the operating voltage a "power good" (PGOOD) signal is provided, and the protection device is blocked as long as this "power good" signal (PGOOD) is missing.

10. The protection device according to claim 9, **characterized in that** the first voltage comparator (U3) is supplied with a supply voltage only when the "Power good" (PGOOD) signal is present.

11. The protection device according to claim 10, **characterized in that** the "Power good" (PGOOD) signal is generated when the supply voltage (Vss) generated by the DC/DC converter is in a predetermined range of values, and **in that** the supply voltage of the first voltage comparator (U3) comes from the output of a second voltage comparator (U4) to the inputs of which the "Power good" (PGOOD) signal and a threshold value (REF) are connected.

12. The protection device according to claim 11, **characterized in that** said threshold value (REF) comes from an internal voltage reference of said second voltage comparator (U4).

13. The protection device according to any of claims 7 to 12, **characterized in that** the pyrotechnic switch is formed as a pyrotechnic disconnection device, and is attached outside of the two points to the conductor.

## Revendications

1. Dispositif permettant de générer une impulsion de tension à partir d'une source de tension à faible valeur ohmique afin d'allumer un organe d'allumage (R8) pyrotechnique, la tension de la source de tension à faible valeur ohmique étant inférieure à la tension d'allumage requise par l'organe d'allumage (R8) pyrotechnique, et l'organe d'allumage (R8) étant monté en parallèle avec une inductance (L3), et la tension d'allumage étant générée en interrompant le courant, provoquée par la source de tension à faible valeur ohmique, qui circule dans l'inductance (L3), **caractérisé en ce que** la source de tension à faible valeur ohmique est un conducteur dans lequel circule un courant et dont on prélève la tension à deux endroits différents.

2. Dispositif selon la revendication 1, **caractérisé en ce que** l'inductance (L3) correspond à au moins 1 $\mu$H, de préférence au moins 2 $\mu$H, avec une préférence particulière au moins 4 $\mu$H.

3. Dispositif selon les revendications 1 ou 2, **caractérisé en ce que** la résistance de ladite inductance est inférieure ou égale à 5 m$\Omega$, de préférence inférieure ou égale à 2 m$\Omega$.

4. Dispositif selon l'une des revendications 1 à 3, **caractérisé en ce que** le courant qui circule dans l'inductance (L3) est commandé par un transistor (U6), s'agissant préférentiellement d'un FET, plus préférentiellement d'un MOSFET, notamment d'un MOSFET à enrichissement.

5. Dispositif selon la revendication 4, **caractérisé en ce que** le transistor (U6) présente une tension de claquage d'au moins 40 V, préférentiellement d'au moins 55 V.

6. Dispositif selon les revendications 4 ou 5, **caractérisé en ce que** le transistor (U6) est commandé par un générateur de signaux rectangulaires (U2).

7. Dispositif de protection pour une ligne d'une alimentation en tension d'un véhicule à moteur,

ledit dispositif de protection étant connecté à deux endroits dudit conducteur, la chute de tension provoquée par la résistance (R1) de ladite ligne entre lesdits deux endroits étant branchée, afin de détecter une surintensité dans le conducteur, par le dispositif de protection sur une entrée d'un premier comparateur de tension (U3) lequel présente, à sa deuxième entrée, une valeur de tension prédéfinie, et que la signal (OvCurr) obtenu à la sortie du premier comparateur de tension (U3) est directement ou indirectement transmis à l'organe d'allumage (R8) d'un interrupteur pyrotechnique, faisant en sorte que ledit interrupteur pyrotechnique soit déclenché lorsque la valeur de tension prédéfinie est dépassée,
la chute de tension servant en outre à alimenter un convertisseur DC/DC (U1) dont la sortie (Vout) fournit la tension d'alimentation (Vss) dudit dispositif de protection,
**caractérisé en ce que**
le dispositif de protection contient un dispositif selon l'une des revendications 1 à 6.

8. Dispositif de protection selon les revendications 6 et 7, **caractérisé en ce que** le générateur de signaux rectangulaires (U2) est alimenté depuis la sortie du premier comparateur de tension (U3).

9. Dispositif de protection selon les revendications 7 ou 8, **caractérisé en ce qu'**un signal "Power good" (PGOOD) est fourni lorsqu'une valeur de consigne pour la tension de fonctionnement est atteinte, et ledit dispositif de protection est bloqué tant que ce signal "Power good" (PGOOD) n'est pas présent.

10. Dispositif de protection selon la revendication 9, **caractérisé en ce que** le premier comparateur de tension (U3) est alimenté par une tension d'alimentation seulement si le signal "Power good" (PGOOD) est présent.

11. Dispositif de protection selon la revendication 10, **caractérisé en ce que** le signal "Power good" (PGOOD) est généré lorsque la tension d'alimentation (Vss), produite par ledit convertisseur DC/DC, se trouve dans une plage de valeurs prédéfinie, et que la tension d'alimentation du premier comparateur de tension (U3) est issue de la sortie d'un deuxième comparateur de tension (U4), le signal "Power good" (PGOOD) et une valeur de seuil (REF) étant branchés sur les entrées de ce dernier.

12. Dispositif de protection selon la revendication 11, **caractérisé en ce que** la valeur de seuil (REF) est issue d'une référence de tension interne du deuxième comparateur de tension (U4).

13. Dispositif de protection selon l'une des revendications 7 à 12, **caractérisé en ce que** ledit interrupteur pyrotechnique est réalisé sous forme d'un sectionneur pyrotechnique, tout en étant monté à l'extérieur desdits deux endroits sur ledit conducteur.

Fig. 1

Fig. 2

Fig. 3

Fig. 4

+V

L3
4,4µH

R8
2,1Ω

IPB160N04S4L_H1

Tcase
Tj
source

gate
drain

Wave

U6

Fig. 5

**IN DER BESCHREIBUNG AUFGEFÜHRTE DOKUMENTE**

**In der Beschreibung aufgeführte Patentdokumente**

- DE 102016107707 B
- US 5898122 A